# DEMANDE DE BREVET EUROPEEN

(11) **EP 4 201 719 A1**
(43) Date de publication de la demande: **28.06.2023**
(21) Numéro de dépôt: 22207452.8
(22) Date de dépôt: 15.11.2022
(51) Int. Cl.: B60H 1/34, B60K 37/02

(54) **AGENCEMENT D'UNE PLANCHE DE BORD ÉQUIPÉE D'UN ÉCRAN D'AFFICHAGE**

(30) Priorité: 21.12.2021 FR 2114107
(71) Demandeur: Renault s.a.s, 92100 Boulogne Billancourt (FR)
(72) Inventeur: DAGOREAU, Alain, 78280 Guyancourt (FR); MARCEAU, Thierry, 78280 Guyancourt (FR)

(57) **Abrégé**

Agencement d'une planche de bord (5) dans l'habitacle d'un véhicule automobile comprenant au moins un écran d'affichage (2) qui comporte un bord inférieur (22, un bord supérieur (21) et une face d'affichage (20), ledit agencement comprenant au moins un aérateur (12, 12') situé derrière ledit écran, et au moins un déflecteur (11) mobile interposé entre ledit écran et ledit au moins un aérateur, ledit déflecteur étant mobile au moins selon une direction haut-bas par rapport audit écran.

## Description

L'invention concerne le domaine des planches de bord d'un véhicule comportant un écran d'affichage d'informations relatives au véhicule ou autres.

Il est maintenant répandu d'avoir au moins un écran implanté au niveau du tableau de bord, apparaissant en façade de la planche de bord, pour l'affichage d'informations, relatives au véhicule ou autres, en particulier au niveau du poste de conduite, les informations étant destinées au conducteur. L'écran se situe sensiblement au niveau du volant, plus ou moins en partie haute et à l'arrière du volant, pour qu'il soit visible et lisible par le conducteur. En outre, la planche de bord est équipée d'aérateurs, qui par piquage d'air ou connectés directement au module de chauffage, ventilation et climatisation, module, couramment désigné sous son acronyme anglais HVAC, diffusent l'air dans l'habitacle. Certains de ces aérateurs sont disposés de chaque côté de l'écran d'affichage d'informations. Ces aérateurs sont orientables gauche-droite et haut-bas, par exemple grâce à des éléments orientables, par exemple des lamelles, de manière à pouvoir privilégier une direction de diffusion de l'air dans l'habitacle, pour que le conducteur puisse choisir de recevoir de l'air à différents niveaux de son corps.

Un inconvénient est que les aérateurs, qui encadrent l'écran d'affichage, empiètent sur la surface d'affichage, alors que l'on souhaite disposer d'une surface d'affichage de plus en plus importante.

Un but de l'invention est de résoudre cet inconvénient.

A cet effet, l'invention propose un agencement d'une planche de bord dans l'habitacle d'un véhicule automobile comprenant au moins un écran d'affichage qui comporte un bord inférieur, un bord supérieur et une face d'affichage, ledit agencement comprenant au moins un aérateur situé derrière ledit écran, et au moins un déflecteur mobile interposé entre ledit écran et ledit aérateur, ledit déflecteur étant mobile au moins selon une direction haut-bas par rapport audit écran.

En particulier, ledit au moins un aérateur est orientable selon la direction gauche-droite. De préférence, il comprend des moyens d'entrainement motorisés selon la direction gauche-droite. De préférence ledit au moins un aérateur se situe dans l'habitacle à proximité du parebrise.

Selon un mode de réalisation préféré de l'invention, ledit déflecteur a une section longitudinale de forme triangulaire, et comprend une paroi supérieure et une paroi inférieure se rejoignant en pointe vers ledit au moins un aérateur, et une extrémité, opposée à ladite pointe, proximale à la face opposée à la face d'affichage de l'écran au moins pour les parties respectives du déflecteur et de l'écran en vis-à-vis.

En particulier, ladite paroi supérieure du déflecteur est plus haute que ledit bord supérieur de l'écran, lorsque ledit déflecteur est en position orientée vers le haut.

En particulier, ladite paroi inférieure du déflecteur est plus basse que ledit bord inférieur de l'écran, lorsque ledit déflecteur est en position orientée vers le bas.

Selon un mode de réalisation préféré de l'invention, ledit agencement comprend un axe de pivotement transversal autour duquel ledit déflecteur est mobile selon la direction haut-bas. De préférence ledit déflecteur comprend des moyens d'entrainement motorisés par rapport audit axe pivot selon la direction haut-bas.

Selon un mode de réalisation particulier de l'invention, ledit agencement comprend un support dudit écran et dudit déflecteur.

Selon un mode de réalisation préféré de l'invention, ledit agencement comprend deux aérateurs dans une moitié de ladite planche de bord, et ledit déflecteur s'étend transversalement sur une largeur entre lesdits deux aérateurs.

L'invention concerne également un véhicule automobile, comprenant une planche de bord équipée d'un écran d'affichage, avec un agencement de la planche de bord tel que décrit cidessus.

D'autres caractéristiques et avantages de l'invention ressortiront clairement de la description qui en est faite ci-après, à titre indicatif et nullement limitatif, en référence aux dessins annexés sur lesquels :
[Fig. 1] illustre un agencement de la planche de bord d'un véhicule automobile, selon l'invention, suivant une vue en perspective partielle de la partie avant de l'habitacle du véhicule;
[Fig. 2] est une vue schématique en coupe longitudinale d'une position non pivotée d'un agencement analogue à celui de la [Fig. 1], dans l'habitacle du véhicule;
[Fig. 3] est une vue schématique en coupe longitudinale d'une position pivotée vers le haut de l'agencement de la [Fig. 2], dans l'habitacle du véhicule;
[Fig. 4] est une vue schématique en coupe longitudinale d'une position pivotée vers le bas de l'agencement de la [Fig. 2], dans l'habitacle du véhicule.

Dans tout ce qui suit, les orientations sont les orientations habituelles d'un véhicule automobile définies selon un repère orthonormé direct XYZ, classiquement utilisé en conception automobile, dans lequel l'axe X désigne la direction longitudinale du véhicule, orienté de l'avant vers l'arrière, l'axe Y désigne la direction transversale et est orienté de la gauche vers la droite du véhicule, et l'axe Z désigne la direction verticale, et est orienté vers le haut. Ainsi, les termes « supérieur », « inférieur », « avant », « arrière », « gauche », « droit » s'entendent par rapport aux orientations définies suivant ce repère.

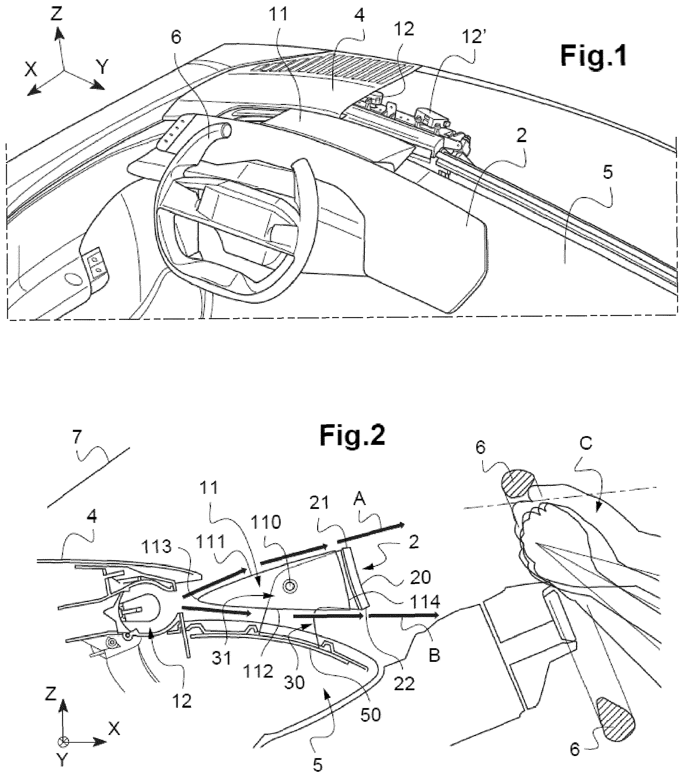

Les figures 1 à 4 vont être commentées ensemble.

La planche de bord 5 s'étend transversalement (direction Y) selon la largeur de l'habitacle du véhicule, longitudinalement (direction X) vers le parebrise 7 du véhicule, et dans un plan légèrement incliné par rapport à la direction verticalement. Une coiffe 4 ferme le haut de la planche de bord, au moins sur sa face supérieure, de manière à masquer des éléments du système de diffusion d'air, des câblages, ou autres dispositifs du véhicule présents au niveau de la planche de bord.

Ladite planche de bord comprend un écran d'affichage 2, disposé selon l'exemple, du côté du poste de conduite (le conducteur C étant représenté par ses mains posées sur le volant 6, sur les figures 2 à 4). Cet écran d'affichage s'étend en façade de la planche, la face d'affichage 20 étant tournée vers le conducteur. Cet écran s'étend entre un bord inférieur 22 et un bord supérieur 21 suivant sa hauteur « h », selon une direction sensiblement inclinée par rapport à la direction verticale (Z). Il s'étend suivant sa largeur, selon la direction transversale (Y), sur près de la moitié de la largeur de la planche de bord. L'épaisseur de l'écran (direction X) est faible. Cet écran permet d'afficher des informations notamment relatives au véhicule, il fait partie du tableau de bord.

Ladite planche de bord comprend deux aérateurs 12, 12' disposés à l'avant, à proximité du parebrise 7, et sous la coiffe 4. Ces deux aérateurs sont espacés transversalement l'un de l'autre dans une moitié de la planche de bord, côté conducteur. Ces deux aérateurs soufflent de l'air provenant du système d'air conditionné (HVAC) afin de diffuser de l'air vers l'arrière, dans l'habitacle. Cet air provenant dudit système d'air conditionné peut être amené par des conduits reliés à un conduit central du module HVAC, situé à l'avant du véhicule, à proximité du parebrise. Lesdits aérateurs sont orientables gauche-droite. Ils comprennent des moyens d'entraînement motorisés, afin par exemple que le conducteur puisse facilement les actionner depuis son siège, pour facilement gérer cette orientation gauche-droite, par exemple depuis une commande qui peut s'afficher sur ledit écran.

Entre la zone occupée par les aérateurs 12, 12' et l'écran 2, est disposé un déflecteur 11, à section longitudinale de forme triangulaire.

Le déflecteur 11 et l'écran 2 sont supportés par un support 31, qui comprend un pied 30 inséré dans une zone 50 de la planche de bord 5.

Ce déflecteur comprend une paroi supérieure 111 et une paroi inférieure 112 qui se rejoignent en pointe 113, en direction de la zone des aérateurs 12, ladite pointe 113 étant l'extrémité distale du déflecteur par rapport à l'écran. A l'opposé, l'extrémité proximale 114 du déflecteur, formé par l'espace transversal fermé entre les parois inférieure 112 et supérieure 111, est d'une hauteur identique ou quasi-identique, à celle de l'écran.

Le déflecteur s'étend sur une largeur (selon la direction transversale Y), allant au moins d'un aérateur à l'autre et/ou correspondant à au moins la partie de l'écran s'étendant dans la partie du poste de conduite.

Ce déflecteur 11 est orientable de haut en bas à l'arrière de l'écran. Il comprend des moyens motorisés l'entraînant en pivotement, autour d'un axe pivot transversal 110 qui traverse le support 31, pour permettre une diffusion de l'air haut-bas.

Lorsque le déflecteur 11 n'est pas pivoté à l'arrière de l'écran 2, l'air arrivant depuis les aérateurs passe au-dessus (flux A) et en-dessous (flux B) de l'écran (voir [Fig. 2] ). Ledit déflecteur en position non pivotée est disposé de sorte que sa pointe 113 soit à proximité et sensiblement centrée par rapport aux sorties d'air des aérateurs 12. Du côté de l'extrémité proximale 114 du déflecteur, sa paroi supérieure 111 affleure avec le bord supérieur 21 de l'écran, et sa paroi inférieure 112 affleure avec le bord inférieur 22 de l'écran, pour les parties respectives du déflecteur et de l'écran en vis-à-vis. Le déflecteur est caché derrière l'écran.

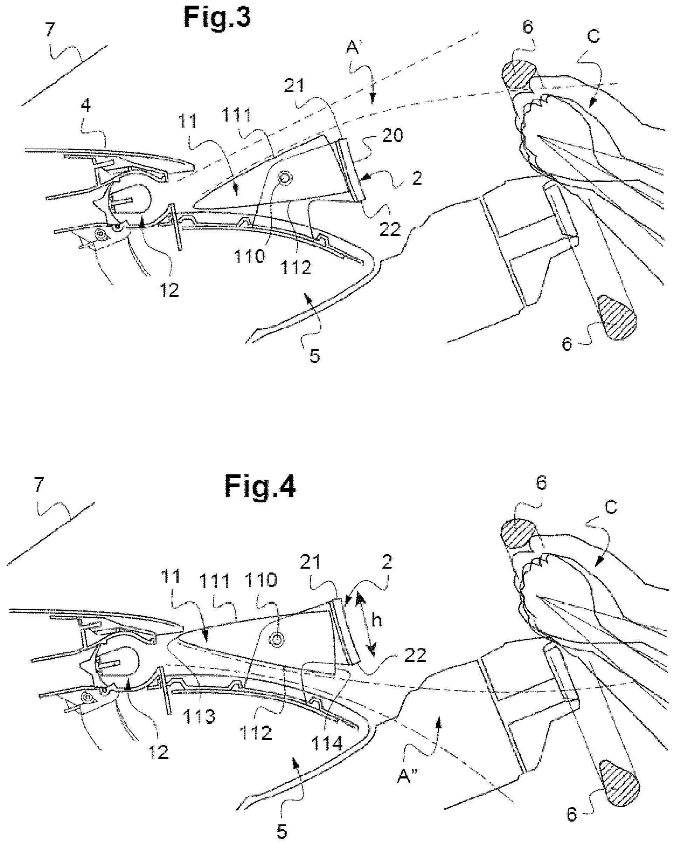

Lorsque l'écran est pivoté vers le haut, sa paroi supérieure 111 se trouve au-dessus du bord supérieur 21 de l'écran (voir [Fig. 3]), de sorte que cette paroi 111 dévie de l'air soufflé depuis les aérateurs vers le haut (flux A') pour être dirigé vers la partie supérieure (poitrine - tête) du conducteur C.

Lorsque le déflecteur 11 est pivoté vers le bas, sa paroi inférieure 112 se trouve en-dessous du bord inférieur 22 de l'écran (voir [Fig. 4]), de sorte que cette paroi inférieure dévie de l'air soufflé depuis les aérateurs vers le bas (flux A"). L'air suit une direction préférentielle, pour être dirigé vers la partie médiane (buste - bassin) du conducteur C.

L'invention propose ainsi un agencement de planche de bord qui permet de disposer d'un écran avec une grande surface d'affichage pour l'écran, ou d'avoir plusieurs écrans côte à côte.

## Revendications

1. Agencement d'une planche de bord (5) dans l'habitacle d'un véhicule automobile comprenant au moins un écran d'affichage (2) qui comporte un bord inférieur (22), un bord supérieur (21) et une face d'affichage (20), ledit agencement comprenant au moins un aérateur (12, 12') situé derrière ledit écran, et au moins un déflecteur (11) mobile interposé entre ledit écran et ledit au moins un aérateur, ledit déflecteur étant mobile au moins selon une direction haut-bas par rapport audit écran.

2. Agencement d'une planche de bord selon la revendication 1, **caractérisé en ce que** ledit au moins un aérateur est orientable selon la direction gauche-droite, et de préférence ledit au moins un aérateur comprenant des moyens d'entrainement motorisés selon la direction gauche-droite.

3. Agencement d'une planche de bord selon l'une quelconque des revendications 1 à 2, **caractérisé en ce que** ledit déflecteur (11) a une section longitudinale de forme triangulaire, et comprend une paroi supérieure (111) et une paroi inférieure (111) se rejoignant en pointe (113) vers ledit au moins un aérateur (12, 12'), et une extrémité (114), opposée à ladite pointe, proximale à la face opposée à la face d'affichage de l'écran au moins pour les parties respectives du déflecteur et de l'écran en vis-à-vis.

4. Agencement d'une planche de bord selon la revendication 3, **caractérisé en ce que** du côté de l'extrémité proximale (114) du déflecteur, ladite paroi supérieure (111) du déflecteur affleure avec le bord supérieur (21) de l'écran, et ladite paroi inférieure (112) du déflecteur affleure avec le bord inférieur (22) de l'écran, au moins pour les parties respectives du déflecteur et de l'écran en vis-à-vis, lorsque ledit déflecteur est en position non orientée vers le bas ou vers le haut.

5. Agencement d'une planche de bord selon l'une des revendications 3 à 4, **caractérisé en ce que** ladite paroi supérieure (111) du déflecteur est plus haute que ledit bord supérieur (21) de l'écran, lorsque ledit déflecteur est en position orientée vers le haut.

6. Agencement d'une planche de bord selon l'une des revendications 3 à 5, **caractérisé en ce que** ladite paroi inférieure (112) du déflecteur est plus basse que ledit bord inférieur (22) de l'écran, lorsque ledit déflecteur est en position orientée vers le bas.

7. Agencement d'une planche de bord selon l'une des revendications 1 à 6, **caractérisé en ce qu'**il comprend un axe de pivotement (110) transversal, autour duquel ledit déflecteur est mobile selon la direction haut-bas, de préférence ledit déflecteur comprenant des moyens d'entrainement motorisés par rapport audit axe pivot selon la direction haut-bas.

8. Agencement d'une planche de bord selon l'une des revendications 1 à 7, **caractérisé en ce qu'**il comprend un support (30, 31) dudit écran (2) et dudit déflecteur (11).

9. Agencement d'une planche de bord selon l'une des revendications 1 à 8, **caractérisé en ce qu'**il comprend deux aérateurs (12, 12') dans une moitié de ladite planche de bord, et ledit déflecteur (11) s'étend transversalement sur une largeur entre lesdits deux aérateurs.

10. Véhicule automobile comprenant une planche de bord (5) équipée d'un écran d'affichage (2), **caractérisé en ce qu'**il comprend un agencement de la planche de bord selon l'une quelconque des revendications précédentes
